# EUROPÄISCHE PATENTANMELDUNG

(11) **EP 2 309 136 A2**
(43) Veröffentlichungstag der Anmeldung: **13.04.2011**
(21) Anmeldenummer: 10178126.8
(22) Anmeldetag: 22.09.2010
(51) Int. Cl.: F16B 7/04

(54) **Schienenanschlusselement**

(30) Priorität: 08.10.2009 DE 102009045474
(71) Anmelder: HILTI Aktiengesellschaft, 9494 Schaan (LI)
(72) Erfinder: Wiedner, Christoph, 6800, Feldkirch (AT); Hermann, Fritz, 86899, Landsberg (DE); Nutzmann, Marc, Lindau, 88131 (DE)

(57) **Zusammenfassung**

Die Erfindung betrifft ein Schienenanschlusselement (11) zur Anordnung eines Schienenkörpers, der Innenraum aufweist, an einem Abhängeelement. Das Schienenanschlusselement (11) weist zwei zueinander beabstandete Seitenwände (12), die jeweils einen Einschiebabschnitt (13) zum Einschieben des Schienenanschlusselementes (11) in den Innenraum (32) aufweisen, und einen die Seitenwände (12) verbindenden Verbindungsabschnitt (22) auf, der eine Aufnahme (23) für das Abhängeelement aufweist. Die Seitenwände (12) sind im Bereich des Einschiebabschnitts (13) bereichsweise in der Höhe (H) reduziert. Weiter betrifft die Erfindung eine Festlegevorrichtung mit einem derartigen Schienenanschlusselement (11).

## Beschreibung

Die Erfindung betrifft ein Schienenanschlusselement, der im Oberbegriff des Patentanspruchs 1 genannten Art. Weiter betrifft die Erfindung eine Festlegevorrichtung mit einem derartigen Schienenanschlusselement.

Zum Fixieren eines Schienenkörpers beabstandet zu einem Bauteil, wie beispielsweise eine Decke, werden diese mittels Fixiereinrichtungen, z. B. mit Muttern und Unterlegscheiben, an zumeist stangenförmigen Abhängeelementen, wie beispielsweise Gewindestangen, fixiert, welche durch einander gegenüberliegende Montageöffnungen am Schienenkörper durch den Innenraum des Schienenkörpers hindurchgeführt sind. Auf dem Schienenkörper werden beispielsweise Leitungen, z. B. Rohre oder Kanäle, direkt oder aufgeständert gelagert.

Nachteilig an dieser bekannten Lösung ist, dass die Fixierung beabstandet zum Ende des Schienenkörpers erfolgen muss und somit mehr Schienenmaterial verwendet wird, als für die Lagerung erforderlich ist. Zudem erfordert diese Art der Fixierung eine Vielzahl von einzelnen, separat zu montierenden Teilen, die zudem in einer bestimmten Abfolge zu montieren sind.

Auf dem Markt ist unter dem Namen METU System MS der Firma METU Meinig AG ein U-förmiges Schienenanschlusselement zur Anordnung eines Schienenkörpers, der einen über die Enden des Schienenkörpers und über mehrere zueinander beabstandete Montageöffnung zugänglichen Innenraum aufweist, an einem Abhängeelement erhältlich. Das Schienenanschlusselement wird am abgelängten Ende des Schienenkörpers angeordnet. Das Schienenanschlusselement weist zwei zueinander beabstandete Seitenwände, die jeweils einen entsprechend des Innenraums des Schienenkörpers ausgebildeten Einschiebabschnitt zum Einschieben des Schienenanschlusselement am Ende des Schienenkörpers in dessen Innenraum aufweisen, und einen die Seitenwände verbindenden Verbindungsabschnitt auf, der eine Aufnahme für das Abhängeelement aufweist. Damit sich die Einschiebeabschnitte im Innenraum des Schienenkörpers verkeilen, sind diese leicht konisch ausgebildet, weshalb das Schienenanschlusselement mit kräftigen Hammerschlägen ausreichend tief in den Schienenkörper eingetrieben werden muss. Anschliessend wird mittels einer auf die durch die Aufnahme des Schienenanschlusselementes hindurchgeführten Gewindestange als Abhängeelement eine Mutter als Fixierelement auf diese aufgeschraubt und der Schienenkörper in der gewünschten Höhe fixiert.

Nachteilig an der bekannten Lösung ist, dass das Schienenanschlusselement den Endabschnitt des Schienenkörpers und insbesondere den Innenraum des Schienenkörpers im endseitigen Bereich an den Seitenwänden im Wesentlichen vollständig ausfüllt, so dass an dem entsprechenden Endabschnitt des Schienenkörpers keine Befestigungsmittel zum Festlegen von Leitungen oder weiteren Abhängungen angeordnet werden können.

Aufgabe der Erfindung ist es, ein Schienenanschlusselement zu schaffen, das die vorgenannten Nachteile nicht aufweist und insbesondere auch im montierten Zustand die Anordnung von Befestigungselementen im Endbereich des Schienenkörpers ermöglicht. Weiter ist es Aufgabe der Erfindung eine Anordnung mit einem derartigen Schienenanschlusselement zu schaffen.

Die Aufgabe ist durch die Merkmale der unabhängigen Ansprüche gelöst. Vorteilhafte Weiterbildungen sind in den Unteransprüchen dargelegt.

Gemäss der Erfindung ist zumindest eine der Seitenwände im Bereich des Einschiebabschnitts bereichsweise in der Höhe reduziert.

Durch die reduzierte Höhe ist im Innenraum des Schienenkörpers ein Freiraum vorhanden, der die Anordnung von Befestigungselementen mit Hintergreifabschnitten, wie z. B. Schienenmuttern mit Hintergreifteilen oder Rohrklammern mit Hintergreifhakenelementen, so genannte Strut Clamps, trotz des am Endes des Schienenkörpers angeordneten Schienenanschlusselement ermöglicht. Vorteilhaft ist der Bereich mit der reduzierten Höhe zwischen dem im Schienenkörper zu liegen kommenden Ende des Einschiebabschnitts und beabstandet zu dem Verbindungsabschnitt vorgesehen. Damit sind am im Schienenkörper zu liegen kommenden Ende und am Ende des Schienenkörpers noch Materialabschnitte des Einschiebabschnitts der Seitenwände vorhanden, welche aufgrund ihrer Anlage im Inneren des Schienenkörpers eine ausreichend Fixierung des Schienenkörpers am Abhängeelement gewährleisten.

Weiter ist der Kraftaufwand zur Anordnung des Schienenanschlusselementes an dem Ende des Schienenkörpers aufgrund der im Vergleich zu dem bekannten Schienenanschlusselement veringerten Reibungsfläche derart gering, dass das Schienenanschlusselement z. B. von Hand ohne Zuhilfenahme eines zusätzlichen Werkzeugs am Ende des Schienenkörpers in dessen Innenraum ausreichend tief einschiebbar ist.

Vorzugsweise ist zumindest ein Sperrelement an zumindest einer der Seitenwände im Bereich des Einschiebabschnitts vorgesehen, welches eine Sicherung gegen eine ungewollte Verschiebung oder gegen ein Lösen des Schienenanschlusselementes aus dem Schienenkörper ausbildet.

Bevorzugt ist das zumindest eine Sperrelement ein von der Seitenwand abragende Lasche, welche im montierten Zustand zumindest abschnittsweise mit einem Abschnitt an der Innenseite des Schienenkörpers in Anlage kommt. Das freie Ende der Lasche ist vorteilhaft entgegen der Einschiebrichtung des Schienenanschlusselementes in den Innenraum des Schienenkörpers ausgerichtet.

Vorzugsweise ist zumindest eine Aufnahmeaussparung im Bereich des Verbindungsabschnitts für ein am Abhängeelement anordnenbares Fixierelement vorgesehen, welche eine gesicherte Anordnung des Fixierelementes am Schienenanschlusselement und somit eine vorteilhafte Fixierung des Schienenkörpers am Abhängeelement ermöglicht. Die zumindest eine Aufnahmeaussparung ist vorteilhaft an dem Ende der Aufnahme für das Abhängeelement vorgesehen, welche im montierten nach unten beziehungsweise dem Boden zugewandt ist. In einer vorteilhaften Ausführungsform ist an beiden Enden der Aufnahme für das Abhängeelement jeweils eine Aufnahmeaussparung für je ein Fixierelement vorgesehen, so dass bei der Anordnung des Schienenanschlusselementes am Ende des Schienenkörpers keine besondere Ausrichtung desselben zu berücksichtigen ist.

Bevorzugt ist zumindest ein Anschlagabschnitt an zumindest einer der Seitenwände vorgesehen, der mit dem entsprechenden Ende des Schienenkörpers in Anlage bringbar ist und ein zu tiefes Einschieben des Schienenanschlusselementes in den Schienenkörper verhindert. Der Einschiebabschnitt der Seitenwand erstreckt sich somit vom freien Ende der Seitenwand bis zu dem an der entsprechenden Seitenwand vorgesehenen Anschlagabschnitt, der benachbart zu dem freien Ende der Seitenwand vorgesehen ist. Vorteilhaft ist an beiden Seitenwänden des Schienenanschlusselementes jeweils zumindest ein Anschlagabschnitt vorgesehen. Der zumindest eine Anschlagabschnitt ist jeweils von einer an der entsprechenden Seitenwand ausgeformten, vorteilhaft nach innen gerichteten Lasche ausgebildet. Weisen beide Seitenwände jeweils zumindest einen, jeweils als Lasche ausgebildeten Anschlagabschnitt auf, so sind diese Laschen vorteilhaft nach innen gerichtet und weiter vorteilhaft einander zugewandt angeordnet.

Eine erfindungsgemässe Festlegevorrichtung zur Festlegung eines Schienenkörpers, der einen über die Enden des Schienenkörpers und über zumindest eine Montageöffnung zugänglichen Innenraum mit einer Innenhöhe aufweist, an einem Abhängeelement weist zumindest ein Fixierelement zur Anordnung an dem Abhängeelement und ein Schienenanschlusselement mit einem oder allen der vorgenannten Merkmale auf. Zumindest eine der Seitenwände des Schienenanschlusselementes weist im Bereich des Einschiebabschnitts bereichsweise eine Höhe auf, die kleiner als die entsprechende Innenhöhe des Innenraums des Schienenkörpers ist.

Die Höhe des in der Höhe reduzierten Bereichs wird vorteilhaft abgestimmt auf die Ausgestaltung des Innenraums und der Montageöffnungen des Schienenkörpers gewählt, damit ein in die Montageöffnung einführbares Befestigungselement weiterhin mit seinen Verankerungsabschnitten auch im endseitigen Bereich des Schienenkörpers angeordnet werden kann.

Vorzugsweise weist der Schienenkörper einen C-förmigen Querschnitt mit einer in Längserstreckung des Schienenkörpers verlaufenden Montageöffnung auf und die relevante Innenhöhe des Schienenkörpers erstreckt sich bis zum freien Ende des die Montageöffnung begrenzenden Randabschnitts des Schienenkörpers. Derartige Schienenkörper werden auch als Montageschienen bezeichnet und zeichnen sich durch deren Flexibilität im Hinblick auf die Positionierung von Befestigungselementen entlang der Längserstreckung des Schienenkörpers aus.

Bevorzugt weist der Schienenkörper zumindest bereichsweise eine Profilierung auf und das zumindest eine Sperrelement ist mit der Profilierung in Anlage bringbar, wodurch eine vorteilhafte Sicherung des eingeschobenen Schienenanschlusselementes im Schienenkörper gewährleistet ist. Bei einem Schienenkörper mit C-förmigen Querschnitt ist die Profilierung vorteilhaft eine Zahnung, welche z. B. an den freien, vorteilhaft nach innen gerichteten Enden der die Montageöffnung begrenzenden Randabschnitte vorgesehen ist. Ist das zumindest eine Sperrelement eine von der Seitenwand abragende Lasche, so kommt im montierten Zustand des Schienenanschlusselementes vorteilhaft das freie Ende der Lasche mit der Profilierung in Eingriff.

Vorzugsweise ist das zumindest eine Fixierelement eine Schnellmontagemutter, welche einfach und schnell an dem Abhängeelement angeordnet werden kann. Beispielsweise weist die Schnellmontagemutter einen in Richtung der Bohrungsachse verlaufende Schlitzung auf, so dass das zumindest eine Fixierelement an einer beliebigen Stelle des Abhängeelementes seitlich aufgeschoben werden kann. Eine derartige Anordnung ist insbesondere dann vorteilhaft, wenn beabstandet zu einem bereits fixierten Schienenkörper an den gleichen Abhängeelementen nochmals ein Schienenkörper z. B. zwischen dem bereits fixierten Schienenkörper und dem Bauteil, wie eine Decke, an dem die Abhängeelemente angeordnet sind, festzulegen ist. Alternativ ist die Schnellmontagemutter eine Kippmutter, welche eine Schrägbohrung und einander gegenüberliegend angeordnete Gewindeabschnitte aufweist. Eine derartige Schnellmontagemutter wird gegenüber einer Horizontalen verkippt über das Abhängeelement geschoben und nach Erreichen der gewünschten Position gekippt, so dass deren Gewindeabschnitte mit der Aussenseite des Abhängeelementes, welche vorteilhaft mit einem Gewinde versehen ist, in Anlage kommen. Weist das Abhängeelement ein Aussengewinde auf, ist die Schnellmontagemutter vorteilhaft auf dieses aufschraubbar. Weiterhin kann auch bei einer erfindungsgemässen Festlegevorrichtung als Fixierelement eine Standardmutter verwendet werden, wobei die Anordnung derselben am Abhängeelement im Vergleich zu der Anordnung einer Schnellmontagemutter wesentlich zeitaufwändiger ist.

Bevorzugt weist die Schnellmontagemutter zumindest einen Kragenabschnitt auf, der im montierten Zustand vorteilhaft in die Aufnahme des Verbindungsabschnitts des Schienenanschlusselementes eindringt. Der in der Aufnahme zu liegen kommende Kragenabschnitt verhindert im montierten Zustand der Schnellmontagemutter, dass diese ungewollt sich öffnen kann. Vorteilhaft weist die Schnellmontagemutter beidseitig jeweils einen Kragenabschnitt auf, so dass bei deren Anordnung am Abhängeelement keine besondere Ausrichtung der Schnellmontagemutter zu berücksichtigen ist.

Die Erfindung wird nachstehend anhand eines Ausführungsbeispiels näher erläutert. Es zeigen:
- Fig. 1: Ein Schienenanschlusselement in einer perspektivischen Ansicht;
- Fig. 2: eine perspektivische Ansicht auf eine Anordnung mit dem Schienenanschlusselement gem. Fig. 1; und
- Fig. 3: einen Längsschnitt durch die Anordnung gem. Fig. 2 entlang des Schienenkörpers; und
- Fig. 4: einen Querschnitt durch die Anordnung gem. Fig. 2 entlang Linie IV-IV in Fig. 3; und
- Fig. 5: ein Fixierelement in einer perspektivischen Ansicht für eine Anordnung gem. Fig. 2.

Grundsätzlich sind in den Figuren gleiche Teile mit den gleichen Bezugszeichen versehen.

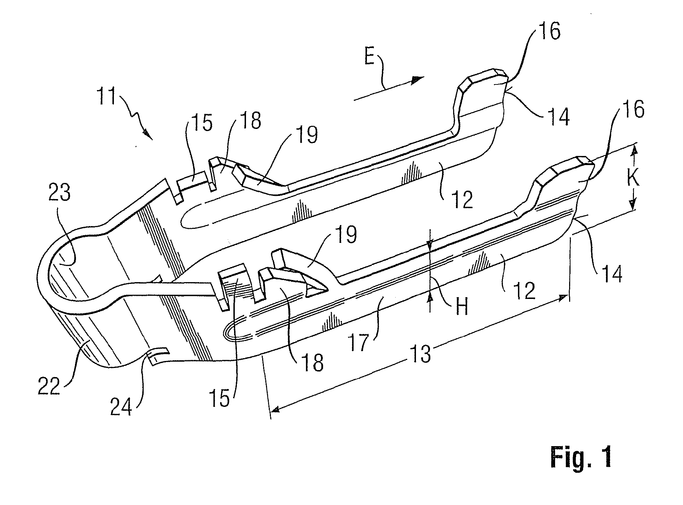

Das in der Figur 1 dargestellte Schienenanschlusselement 11 zur Anordnung eines Schienenkörpers 31 an einem Abhängeelement 41 ist U-förmig ausgebildet und weist zwei zueinander beabstandete Seitenwände 12 sowie einen die Seitenwände 12 verbindenden Verbindungsabschnitt 22, der eine Aufnahme 23 für das Abhängeelement 41 aufweist. Das Abhängeelement 41 ist eine Gewindestange, welche an einem hier nicht dargestellten Bauteil, z. B. an einer Decke festgelegt ist.

Die Seitenwände 12 des Schienenanschlusselementes 11 weisen jeweils einen entsprechend des Innenraums 32 des Schienenkörpers 31 ausgebildeten Einschiebabschnitt 13 auf. Der Einschiebabschnitt 13 erstreckt sich vom freien Ende 14 bis zu einem an der entsprechenden Seitenwand 12 vorgesehenen Anschlagabschnitt 15, welcher beim Einschieben des Schienenanschlusselementes 11 am Ende 33 des Schienenkörpers in dessen Innenraum 32 mit dem Ende 33 in Anlage kommt und ein zu tiefes Einschieben des Schienenanschlusselementes 11 verhindert. Der Anschlagabschnitt 15 ist jeweils von einer an der entsprechenden Seitenwand 12 ausgeformten, nach innen gerichteten Lasche ausgebildet, so dass die Laschen einander zugewandt sind.

Die Seitenwände 12 sind jeweils im Bereich des Einschiebabschnitts 13 bereichsweise in der Höhe H reduziert. Jede Seitenwand 12 weist somit an deren freien Ende 14 einen ersten Halteabschnitt 16 mit einer Höhe K, daran anschliessend einen Freistichabschnitt 17 mit der zu der Höhe K reduzierten Höhe H sowie daran anschliessend einen zweiten Halteabschnitt 18 mit der Höhe K auf. Die Höhe K des ersten Halteabschnitts 16 beziehungsweise des zweiten Halteabschnitts 18 entspricht vorteilhaft der maximalen Innenhöhe I des Innenraums 32 des Schienenkörpers 31.

An jeder Seitenwand 12 ist im Bereich des Freistichabschnitts 17 an dessen gegenüber dem ersten Halteabschnitt 16 und dem zweiten Halteabschnitt 18 zurückversetzten Seite zudem ein Sperrelement 19 vorgesehen. Das Sperrelement ist eine von der Seitenwand 12 abragende Lasche, welche nach innen und entgegen der Einschiebrichtung E des Schienenanschlusselementes 11 ausgerichtet ist.

Im Bereich des Verbindungsabschnitts 22, der die Aufnahme 23 begrenzt, ist eine Aufnahmeaussparung 24 für ein am Abhängeelement 41 anordnenbares Fixierelement 46 vorgesehen.

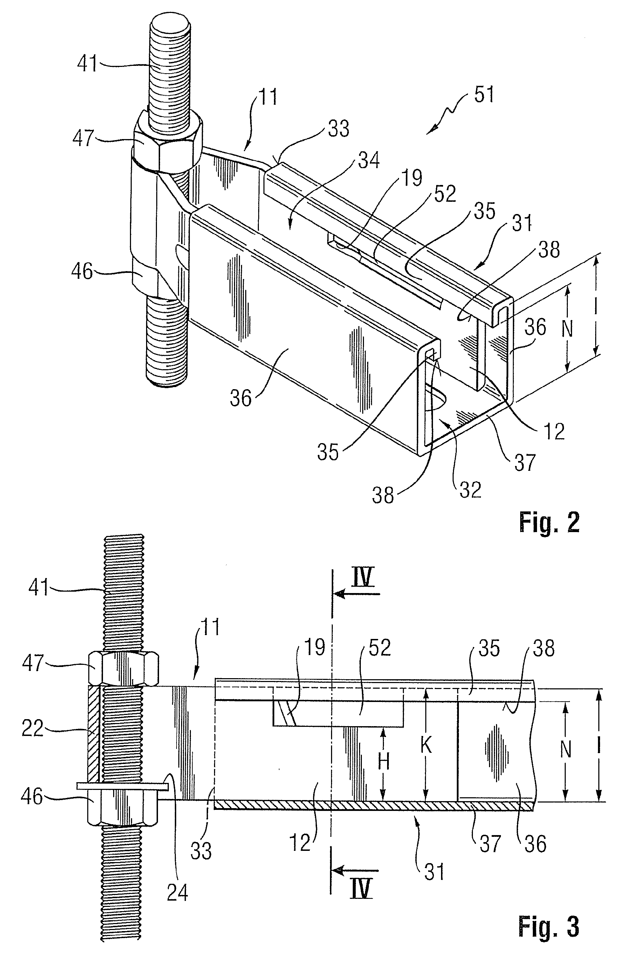

Die in den Figuren 2 bis 5 dargestellte Festlegevorrichtung 51 umfasst ein Schienenanschlusselement 11 sowie zwei Schnellmontagemuttern als Fixierelemente 46 und 47, die zur Fixierung des Schienenkörpers 31 an dem Abhängeelement 41 anordnenbar sind.

Der C-förmige Schienenkörper 31 weist zwei parallel zueinander verlaufende Seitenwände 36 und einen die Seitenwände 36 verbindenden Bodenabschnitt 37 auf. Gegenüberliegend von dem Bodenabschnitt 37 ist eine in Längserstreckung des Schienenkörpers 31 verlaufende Montageöffnung 34 vorgesehen, welche von nach innen ragenden Randabschnitten 35 seitlich begrenzt ist. An den freien Enden der die Montageöffnung 34 begrenzenden Randabschnitte 35 ist eine Zahnung als Profilierung 38 vorgesehen.

Der C-förmige Schienenkörper 31 umgibt einen Innenraum 32, der über das Ende 33 des Schienenkörpers 11 und über die Montageöffnung 34 zugänglich ist. Der Innenraum 32 weist eine maximale Innenhöhe I und im Bereich der die Montageöffnung 34 begrenzenden Randabschnitten 35 eine Innenhöhe N auf.

Die Höhe H des Freistichabschnitts 17 des Schienenanschlusselementes 11 ist derart gewählt, dass im montierten Zustand des Schienenanschlusselementes 11 ein ausreichend grosser Freiraum 52 vorhanden ist, so dass ein Befestigungselement 6 mit einem Hintergreifteil 7 im endnahen Bereich des Schienenkörpers 31 zur Festlegung einer Leitung 8 angeordnet werden kann.

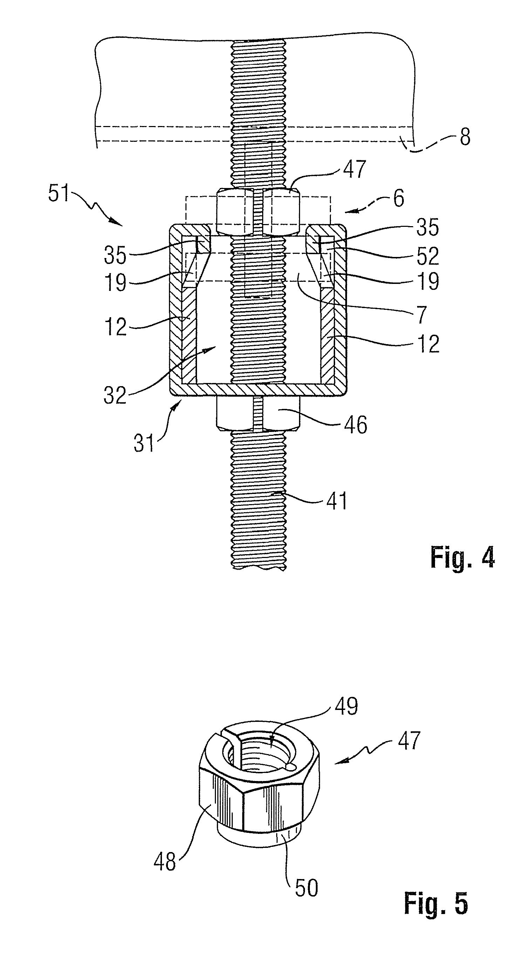

Das in der Figur 5 dargestellte Fixierelement 47 ist eine Schnellmontagemutter, welche einen geschlitzten Grundkörper 48 mit einer Drehmitnahmeflächen aufweisenden Aussenkontur und einer innenliegenden Bohrung 49, welche mit einem Innengewinde versehen ist. Weiter ragt am Grundkörper 48 ein die Bohrung 49 umgebender Kragenabschnitt 50 ab.

Zur Anordnung des Schienenanschlusselementes 11 wird dieses über das Abhängeelement 41 mit den freien Enden 14 der Seitenwände 12 voran gestülpt und in den über das Ende 33 des Schienenkörpers 31 zugänglichen Innenraum 32 geschoben. Da die Seitenwände 12 im Bereich des Freistichabschnitts 17 eine gegenüber dem restlichen Einschiebeabschnitt 13 der Seitenwand 12 reduzierte Reibungsfläche mit der Innenseite des Schienenkörpers aufweist, kann das Schienenanschlusselement 11 von Hand in den Innenraum des Schienenkörpers eingeschoben werden.

Beim Einschieben des Schienenanschlusselementes 11 kommen die an den Seitenwänden 12 ausgebildeten Sperrelemente 19 mit der Profilierung 38 an den Randabschnitten 35 des Schienenkörpers 31 in Anlage und werden dabei entgegen der Einschieberichtung E ausgelenkt. Wenn das Schienenanschlusselement 11 mit den Anschlagabschnitten 15 am Ende 33 des Schienenkörpers 31 ansteht, wird durch die mit der Profilierung 38 an den Randabschnitten 35 des Schienenkörpers 31 verhakten Sperrelemente 19 ein unbeabsichtigtes Verschieben des Schienenanschlusselementes 11 aus dem Schienenkörper 31 verhindert.

Das Fixierelement 46 wird benachbart von dem Schienenanschlusselement 11 auf das Abhängeelement 41 aufgeschoben beziehungsweise aufgeclipst und bis auf die gewünschte Höhe beziehungsweise bis auf den gewünschten Abstand zu einem hier nicht dargestellten Bauteil entlang des Abhängeelementes 41 geschraubt. Anschliessend oder während des Schraubvorgangs greift das Fixierelement 46 in die Aufnahmeaussparung 24 des Schienenanschlusselementes 11 ein. Mit einem zweiten Fixierelement 47, das in Bezug auf die Zeichnung oberhalb des Schienenanschlusselementes 11 am Abhängeelement 41 angeordnet ist, wird der Schienenkörper 31 in der gewünschten Ausrichtung am Abhängeelement 41 gesichert.

Nun können an dem Schienenkörper 31 trotz der angeordneten Festlegevorrichtung 51 Befestigungselemente 6 bis in den endnahen Bereich des Schienenkörpers 31 vorgesehen werden.

## Patentansprüche

1. Schienenanschlusselement zur Anordnung eines Schienenkörpers (31), der einen über zumindest ein Ende (33) des Schienenkörpers (31) und über zumindest eine Montageöffnung (34) zugänglichen Innenraum (32) aufweist, an einem Abhängeelement (41) mit zwei zueinander beabstandeten Seitenwänden (12), die jeweils einen entsprechend des Innenraums (32) des Schienenkörpers (31) ausgebildeten Einschiebabschnitt (13) zum Einschieben des Schienenanschlusselementes (11) am Ende (33) des Schienenkörpers (31) in dessen Innenraum (32) aufweisen, und mit einem die Seitenwände (12) verbindenden Verbindungsabschnitt (22), der eine Aufnahme (23) für das Abhängeelement (41) aufweist, **dadurch gekennzeichnet, dass** zumindest eine der Seitenwände (12) im Bereich des Einschiebabschnitts (13) bereichsweise in der Höhe (H) reduziert ist.

2. Schienenanschlusselement nach Anspruch 1, **dadurch gekennzeichnet, dass** zumindest ein Sperrelement (19) an zumindest einer der Seitenwände (12) im Bereich des Einschiebabschnitts (13) vorgesehen ist.

3. Schienenanschlusselement nach Anspruch 2, **dadurch gekennzeichnet, dass** das zumindest eine Sperrelement (19) ein von der Seitenwand (12) abragende Lasche ist.

4. Schienenanschlusselement nach einem der Ansprüche 1 bis 3, **dadurch gekennzeichnet, dass** zumindest eine Aufnahmeaussparung (24) im Bereich des Verbindungsabschnitts (22) für ein am Abhängeelement (41) anordnenbares Fixierelement (46) vorgesehen ist.

5. Schienenanschlusselement nach einem der Ansprüche 1 bis 3, **dadurch gekennzeichnet, dass** ein Anschlagabschnitt (15) an zumindest einer der Seitenwände (12) vorgesehen ist.

6. Festlegevorrichtung zur Festlegung eines Schienenkörpers (31), der einen über zumindest ein Ende (33) des Schienenkörpers (31) und über zumindest eine Montageöffnung (34) zugänglichen Innenraum (32) mit einer Innenhöhe (I, N) aufweist, an einem Abhängeelement (41) mit zumindest einem Fixierelement (46, 47) zur Anordnung an dem Abhängeelement (41) und mit einem Schienenanschlusselement (11) nach einem der Ansprüche 1 bis 4, wobei die zumindest eine der Seitenwände (12) des Schienenanschlusselementes (11) im Bereich des Einschiebabschnitts (13) bereichsweise eine Höhe (H) aufweist, die kleiner als die entsprechende Innenhöhe (I, N) des Innenraums (32) des Schienenkörpers (31) ist.

7. Festlegevorrichtung nach Anspruch 6, **dadurch gekennzeichnet, dass** der Schienenkörper (31) einen C-förmigen Querschnitt mit einer in Längserstreckung des Schienenkörpers (31) verlaufenden Montageöffnung (34) aufweist und die relevante Innenhöhe (N) des Innenraums (32) des Schienenkörpers (31) sich bis zum freien Ende des die Montageöffnung (34) begrenzenden Randabschnitts (35) des Schienenkörpers (31) erstreckt.

8. Festlegevorrichtung nach Anspruch 6 oder 7, **dadurch gekennzeichnet, dass** der Schienenkörper (31) zumindest bereichsweise eine Profilierung (38) aufweist und das zumindest eine Sperrelement (19) zumindest abschnittweise mit der Profilierung (38) in Anlage bringbar ist.

9. Festlegevorrichtung nach einem der Ansprüche 6 bis 8, **dadurch gekennzeichnet, dass** das zumindest eine Fixierelement (46, 47) eine Schnellmontagemutter ist, die optional zumindest einen Kragenabschnitt (50) aufweist.
